# EUROPEAN PATENT SPECIFICATION

(11) **EP 3 261 019 B1**
(45) Date of publication and mention of the grant of the patent: **02.10.2024**
(21) Application number: 16201541.6
(22) Date of filing: 30.11.2016
(51) Int. Cl.: G06V 20/52

(54) **METHOD AND DEVICE FOR OBTAINING MOVEMENT TRACK**
VERFAHREN UND VORRICHTUNG FÜR DEN ERHALT VON BEWEGUNGSVERFOLGUNG
PROCÉDÉ ET DISPOSITIF PERMETTANT D'OBTENIR UN SUIVI DE MOUVEMENT

(30) Priority: 21.06.2016 CN 201610453399
(43) Date of publication of application: 27.12.2017
(73) Proprietor: Beijing Xiaomi Mobile Software Co., Ltd., Beijing 100085 (CN)
(72) Inventor: WU, Ke, Beijing 100085 (CN); CHEN, Tao, Beijing 100085 (CN); LIU, Huayijun, Beijing 100085 (CN)
(74) Representative: Reddie & Grose LLP

(56) References cited:
- "Multi-Camera Networks", 2 February 2009, ACADEMIC PRESS, Burlington, MA, ISBN: 978-0-12-374633-7, article BERNHARD RINNER ET AL: "Chapter 22: Embedded Middleware for Smart Camera Networks and Sensor Fusion", pages: 511 - 537, XP055374919, DOI: 10.1016/B978-0-12-374633-7.00022-7
- MARKUS QUARITSCH ET AL: "Autonomous Multicamera Tracking on Embedded Smart Cameras", EURASIP JOURNAL ON EMBEDDED SYSTEMS, vol. 5, no. 3, 1 January 2007 (2007-01-01), pages 574 - 10, XP055207958, ISSN: 1687-3955, DOI: 10.1109/TPAMI.2005.167
- BRAMBERGER M ET AL: "Integrating multi-camera tracking into a dynamic task allocation system for smart cameras", PROCEEDINGS. IEEE CONFERENCE ON ADVANCED VIDEO AND SIGNAL BASED SURVEILLANCE, 2005. COMO, ITALY SEPT. 15-16, 2005, PISCATAWAY, NJ, USA,IEEE, PISCATAWAY, NJ, USA, 15 September 2005 (2005-09-15), pages 474 - 479, XP010881222, ISBN: 978-0-7803-9385-1, DOI: 10.1109/AVSS.2005.1577315
- CAI Q ET AL: "TRACKING HUMAN MOTION IN STRUCTURED ENVIRONMENTS USING A DISTRIBUTED-CAMERA SYSTEM", IEEE TRANSACTIONS ON PATTERN ANALYSIS AND MACHINE INTELLIGENCE, IEEE COMPUTER SOCIETY, USA, vol. 21, no. 11, 1 November 1999 (1999-11-01), pages 1241 - 1247, XP000897105, ISSN: 0162-8828, DOI: 10.1109/34.809119

## Description

### TECHNICAL FIELD

The present disclosure generally relates to the terminal technology field, and more particularly to a method and a device for obtaining a movement track.

### BACKGROUND

Nowadays, monitors are installed in many places. Existing monitor systems can merely be used for simple shooting, which facilitates invocation in later stage. But concerning the invocation of related monitors in real life, it means track(s) of one/some preset person need to be confirmed, this confirmation method however shows apparent hysteresis. Moreover, an accurate trace on the preset person and thus an actual track of the preset person will not be achieved due to absence of a record of a previous track of the preset person, which may bury a potential security risk to the safety of an area where the preset person is captured and users in the area.

Bernhard Rinner ET AL: "Chapter 22: Embedded Middleware for Smart Camera Networks and Sensor Fusion", XP055374919, discloses the integration of multiple, potentially heterogeneous, smart cameras into a distributed system for computer vision and sensor fusion, and discusses the requirements on middleware for distributed smart cameras and the services such a middleware has to provide.

Markus Quaritsch ET AL: "Autonomous Multicamera Tracking on Embedded Smart Cameras", XP055207958, discloses a multicamera tracking method on distributed, embedded smart cameras. Smart cameras combine video sensing, processing, and communication on a single embedded device which is equipped with a multiprocessor computation and communication infrastructure. The multicamera tracking approach focuses on a fully decentralized handover procedure between adjacent cameras. The basic idea is to initiate a single tracking instance in the multicamera system for each object of interest. The tracker follows the supervised object over the camera network, migrating to the camera which observes the object. Thus, no central coordination is required resulting in an autonomous and scalable tracking approach.

BRAMBERGER M ET AL: "Integrating multi-camera tracking into a dynamic task allocation system for smart cameras", XP010881222, discloses the integration of multi-camera tracking into an agent-based framework, which features autonomous task allocation for smart cameras targeting trafc surveillance. Since The target platforms are distributed embedded systems with limited resources, the trackers may only be active, if the target is in the camera's field of view. Consequently, the tracking algorithm has to migrate from camera to camera in order to follow the target, whereas the decision when and whereto the migration takes place is reached autonomously by the tracker. Consequently, no central control host is required. Different strategies are further presented on when to migrate a tracker, and how to determine the camera which will observe the tracked object subsequently.

CAI Q ET AL: "TRACKING HUMAN MOTION IN STRUCTURED ENVIRONMENTS USING A DISTRIBUTED-CAMERA SYSTEM", XP000897105, discloses a comprehensive framework for tracking coarse human models from sequences of synchronized monocular grayscale images in multiple camera coordinates. It demonstrates the feasibility of an end-to-end person tracking system using a unique combination of motion analysis on 3D geometry in different camera coordinates and other existing techniques in motion detection, segmentation, and pattern recognition. The system starts with tracking from a single camera view. When the system predicts that the active camera will no longer have a good view of the subject of interest, tracking will be switched to another camera which provides a better view and requires the least switching to continue tracking. The nonrigidity of the human body is addressed by matching points of the middle line of the human image, spatially and temporally, using Bayesian classification schemes. Multivariate normal distributions are employed to model class-conditional densities of the features for tracking, such as location, intensity, and geometric features. Limited degrees of occlusion are tolerated within the system.

### SUMMARY

The invention is defined in the independent claims, to which the reader is now directed. Preferred or advantageous embodiments are set out in the dependent claims. The embodiments of the present disclosure provide a method and a device for obtaining a movement track.

The technical solutions provided by the embodiments of the present disclosure may provide advantages as follows.

The technical solutions provided by the embodiments of the present disclosure may predict the movement track of the preset person according to the current geographic location of the current camera device which captures the target image information and the motion state of the preset person when determines that the preset person information exists in the target image information, and activate the target camera devices along the movement track so as to factually shooting the preset person in time to accurately determine a final actual movement track of the preset person, and record the actual movement track of the preset person so as to determine the trace of preset person according to the actual movement track, which avoids cases that an accurate trace on the preset person and thus an actual track of the preset person may not be achieved in the later stage due to absence of a record of a previous track of the preset person, and avoids potential security risks to an area where the preset person is captured and users in the area.

It should be understood that both the foregoing general description and the following detailed description are exemplary and explanatory only, and shall not be construed to limit the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for obtaining a movement track, according to an example embodiment.
Fig. 2 is a flow chart showing another method for obtaining a movement track, according to an example embodiment.
Fig. 3 is a flow chart showing a still another method for obtaining a movement track, according to an example embodiment.
Fig. 4 is a flow chart showing yet another method for obtaining a movement track, according to an example embodiment.
Fig. 5 is a flow chart showing yet another method for obtaining a movement track, according to an example embodiment.
Fig. 6 is a block diagram showing a device for obtaining a movement track, according to an example embodiment.
Fig. 7 is a block diagram showing another device for obtaining a movement track, according to an example embodiment.
Fig. 8 is a block diagram showing another device for obtaining a movement track, according to an example embodiment.
Fig. 9 is a block diagram showing yet another device for obtaining a movement track, according to an example embodiment.
Fig. 10 is a block diagram showing yet another device for obtaining a movement track, according to an example embodiment.
Fig. 11 is a block diagram showing a device for obtaining a movement track, according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

Nowadays, monitors are installed in many places. Existing monitor systems can merely be used for simple shooting, which facilitates invocation in later stage. But concerning the invocation of related monitors in real life, it means track(s) of one/some preset person need to be confirmed, this confirmation method however shows apparent hysteresis. Moreover, an accurate trace on the preset person and thus an actual track of the preset person will not be achieved due to absence of a record of a previous track of the preset person, which may bury a potential security risk to the safety of an area where the preset person is captured and users in the area.

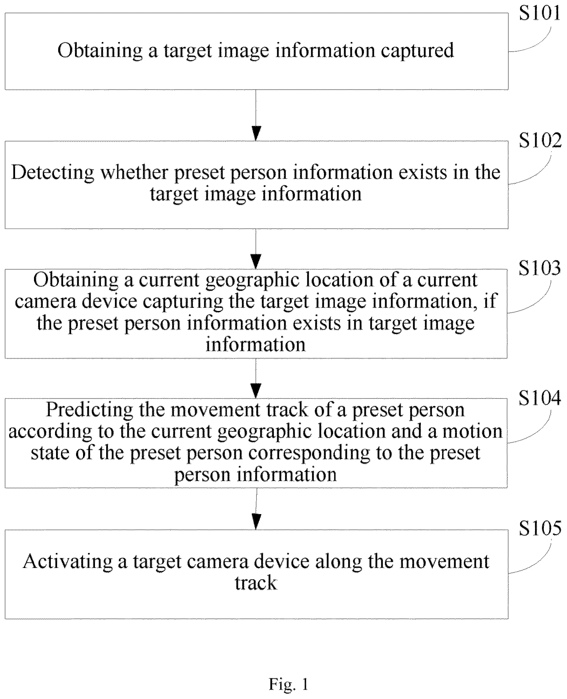

To solve the technical problems described above, embodiments of the present disclosure provide a method for obtaining a movement track, which may be used in a program, a system or a device for obtaining the movement track. Besides, an executive object corresponding to the method may be a terminal with a shooting function, e.g. a terminal of a monitoring system installed in XX building / XX community. Referring to Fig. 1, the method includes the following steps S101 to S105.

In step S101, target image information captured is obtained. That is, target image information captured by a camera device can be obtained.

The current camera device for shooting the target image information may be a camera of the monitoring system in XX building / XX community, or a cellphone, a tablet or a computer and so forth hold by someone, and the target image information may be one or more image information shot currently or in a certain period.

In step S102, it is detected whether preset person information exists in the target image information.

The preset person information includes but not be limited to at least one of preset image information, a preset action, a preset gait and a preset expression, e.g. further includes feature information of a person, such as a mole on the face, a certain face frame and a certain eye shape and so forth.

The preset image information may refer to image information of specific person saved in a cellphone or image information of latest announced escaped criminals and suspects and so forth downloaded automatically from local security system.

The preset action includes but not be limited to at least one of a knife related action (e.g. an action with knife), a gun related action (e.g. an action with gun), an action of hitting people and a dragging action.

The preset gait may be a staggering gait, a running gait, a walking gait and so forth, and the preset expression may be a surprise, panic, fear or grim expression and so forth.

It may be determined whether the preset person corresponding to preset person information exists in the target image information by detecting whether preset person information exists in the target image information, and if the preset person exists in the target image information, the preset person may be the specific person the user wants to track, or the escaped criminals or suspects and so forth, according to the specific definition to the preset person information.

In step S 103, a current geographic location of a current camera device capturing the target image information is obtained, if the preset person information exists in the target image information.

In step S104, the movement track of a preset person is predicted according to the current geographic location and a motion state of the preset person corresponding to the preset person information, the motion state may be directly obtained or speculated from the preset gait of the preset person information.

The current geographic location of the current camera device for capturing the target image information can be automatically obtained if the above preset person information exists in the target image information, such that the movement track of the preset person can be automatically and accurately predicted according to the current geographic location and the motion state of the preset person corresponding to the preset person information.

In step S105, the target camera device along the movement track is activated.

The target camera device and the current camera device can be positioned in the same or different monitoring system(s), and the target camera device may be a camera or devices with shooting function (such as cellphone) and may be connected with the current camera device by wired or wireless way, such as by WiFi network, Bluetooth or Mobile data network.

After the movement track is predicted, since the actual movement track of the preset person may change, the target camera device along the movement track may be activated so as to factually shoot the preset person in time to accurately determine a final actual movement track of the preset person, and record the actual movement track of the preset person so as to determine the trace of preset person according to the actual movement track, which avoids cases that an accurate trace on the preset person and thus an actual track of the preset person may not be achieved in the later stage due to absence of a record of a previous track of the preset person, and avoids potential security risks to an area where the preset person is captured and users in the area.

Furthermore, image data which shows the actual movement track of the preset person may be further obtained by activating the target camera device, such that the movement track of the preset person may be vividly watched in later stage through the image data.

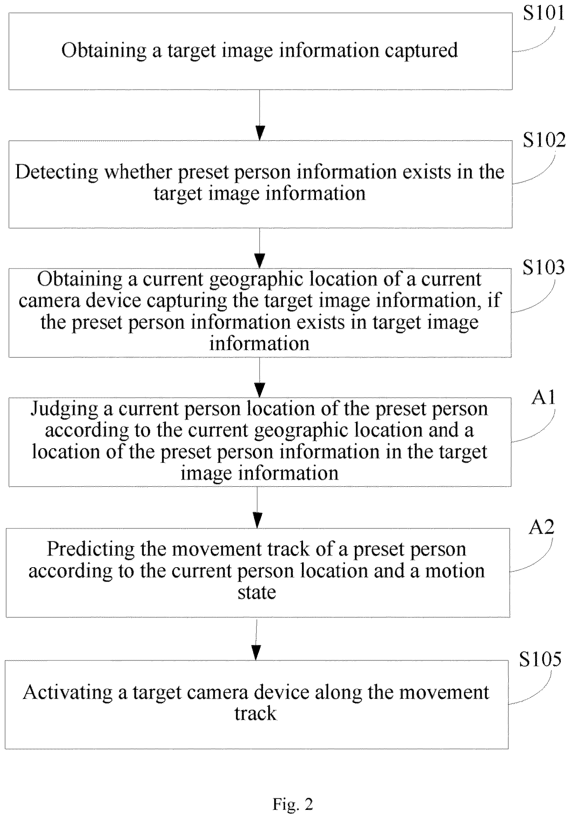

As shown in Fig. 2, in an embodiment, step S104 shown in Fig. 1 is executed as follows.

In step A1, a current location of the preset person is judged or determined according to the current geographic location and a location of the preset person information in the target image information.

After the current geographic location is obtained, since the current camera device corresponds to one area, so the preset person may appear in any position of the shooting area. Therefore, when the preset person positions at different locations, locations of the preset person information in the target image information are different, and ratios in size of the location area the preset person information positioned to the target image information are different. Thus, the current person location of the preset person, i.e. an actual position coordinate of the preset person, may be accurately judged or determined according to the current geographic location and the location of the preset person information in the target image information.

In step A2, the movement track of the preset person is predicted according to the current person location and the motion state. The motion state includes at least one of a current motion mode and a historical motion parameter of the preset person. The current motion mode may be walking, cycling, riding electric bike, driving or taking ferry and so forth. The historical motion parameter is a historical moving rate and a historical moving direction of the preset person at the moment over the past period of time when the target image information including the preset person information is captured.

The movement track of the preset person may be accurately predicted according to the actual current person location and the motion state of preset person.

Specifically, since different current motion states correspond to different motion parameters, therefore an approximate moving rate and moving direction may be obtained according to the current motion state, and thus the movement track of the preset person is accurately predicted; or the movement track of the preset person may be predicted by some algorithms used for movement track prediction, such as Kalman filter algorithm, after the historical motion parameter is obtained.

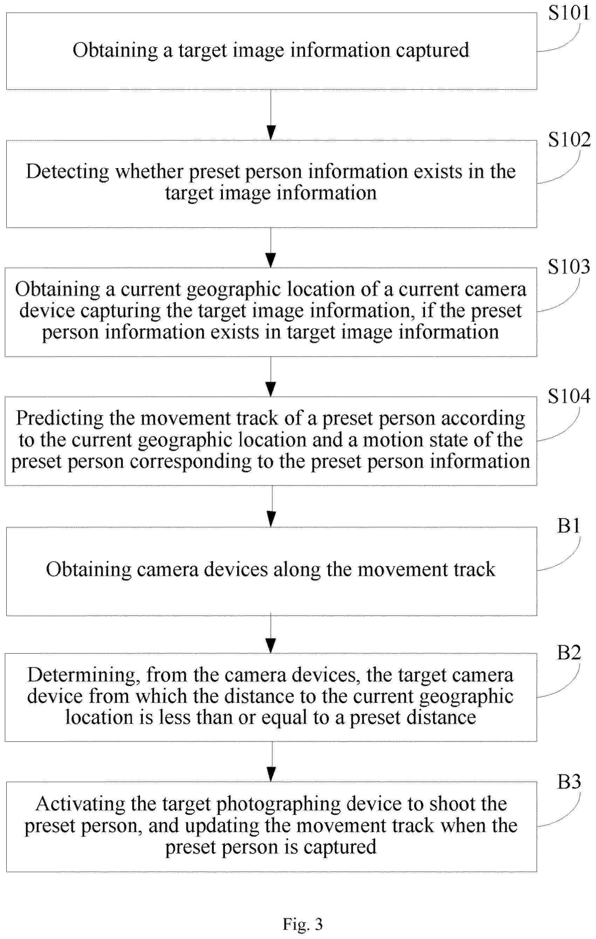

As shown in Fig. 3, in an embodiment, step S105 shown in Fig. 1 described above is executed as follows.

In step B 1, camera devices along the movement track is obtained.

In step B2, the target camera device from which the distance to the current geographic location is less than or equal to a preset distance is determined from the camera devices.

The target camera device is in a range taking the current geographic location as a center and the preset distance as a radius, and the preset distance may be fixed (such as 1 km) or changeable.

In step B3, the target camera device is activated to shoot the preset person and the movement track is updated when the preset person is captured.

Since there may be multiple camera devices along the movement track and the camera devices located far away from the preset person cannot capture the preset person in a short time, therefore, the nearer target camera device from which the distance to the current geographic location is less than or equal to the preset distance may be chosen, and to which an activation instruction may be transmitted, so that they are activated. Thus, the preset person is shot by the target camera device when the preset person moves into a shooting area of the target camera device. Besides, the current person location may be automatically determined again when the preset person is captured, so that the predicted movement track is in time updated, such as being corrected and modified and so on.

Additionally, the movement track of the preset person may be continually updated, corrected and modified by continually repeating the steps above. Thus the latest actual movement track may be obtained.

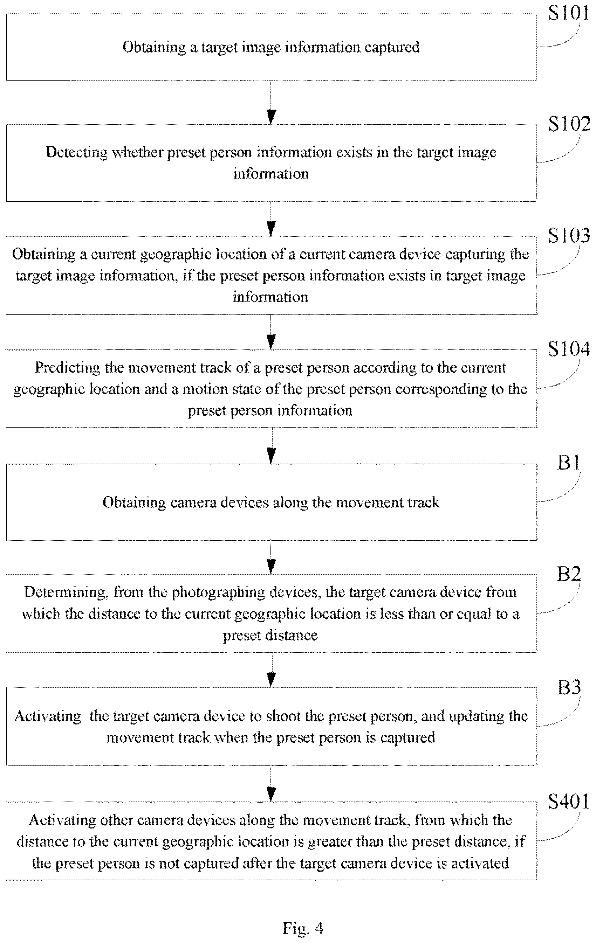

As shown in Fig. 4, in an embodiment, the method describe above further includes the following step.

In step S401, other camera devices along the movement track, from which the distance to the current geographic location is greater than the preset distance, is activated, if the preset person is not captured after the target camera device is activated.

If the preset person is not captured after the target camera device is activated, it indicates that the preset person is not tracked by the target camera device nearby. In order to track the movement track of the preset person, other camera devices along the movement track, from which the distance to the current geographic location is greater than the preset distance, may be activated for further tracking the movement track of the preset person, such that the actual movement track of preset person is obtained, which is convenient for invocation and tracking in later stage.

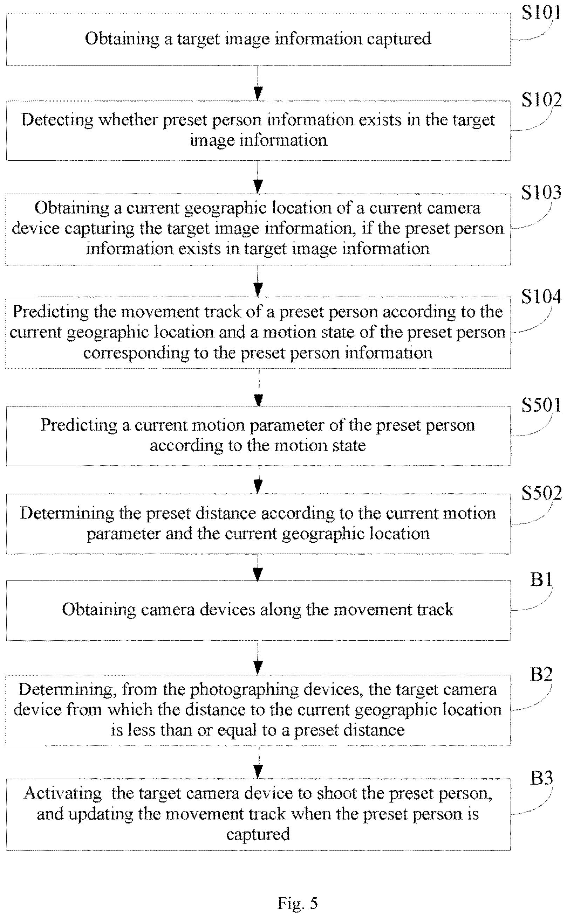

As shown in Fig. 5, in an embodiment, before step B2 is executed, the method described above further includes the following steps.

In step S501, a current motion parameter of the preset person is predicted according to the motion state, the current motion parameter comprises a current moving rate and a current moving direction.

Since different motion states correspond to different motion parameters, and the motion parameter of the preset person shows relative stability and consistency instead of sudden great change in a certain period under the same motion state, therefore, the current motion parameter of the preset person may be predicted according to the motion state thereof.

In step S502, the preset distance is determined according to current motion parameter and the current geographic location.

Since different motion states correspond to different motion parameters, the numbers of camera devices in different preset distances are always different, and different numbers of camera devices are required due to different current motion parameters of the preset person (e.g. when the moving rate of the preset person is fast, the number of camera device required is large in case the preset person is missed by the camera devices), therefore, the preset distance which is suitable to the current motion parameter and the current geographic location is determined according to the current motion parameter and the current geographic location after the current motion parameter is predicted depending on the motion state, so as to adopt suitable number of camera devices to shooting the preset person and obtain the latest movement track of the preset person in time.

Furthermore, as the numbers of the camera devices in the same distance are different depending on different geographic locations, e.g. in the same distance, the number of the camera devices in a mountainous area is much less than that in an urban area. Thus, the current geographic location may be also considered when determining the preset distance.

Step B2 shown in Fig. 5 described above is executed as follows.

The target camera device, from which the distance to the current geographic location is less than or equal to the preset distance and whose direction corresponds to the current moving direction, is determined from the camera devices.

The target camera device, from which the distance to the current geographic location is less than or equal to the preset distance and whose direction corresponds to (i.e. be consistent with) the current moving direction, is determined from the camera devices when determining the target camera device, such that the preset person is effectively captured so as to track and confirm the actual movement track of the preset person with not only the smallest number of the target camera devices, but with a decreased power consumption.

In an embodiment, the preset person information includes: at least one of a preset image information, a preset action, a preset gait and a preset expression.

The preset person information includes but not be limited to at least one of the preset image information, the preset action, the preset gait and the preset expression, e.g. may also be feature information of a person, such as a mole on the face, a certain face frame and a certain eye shape and so forth.

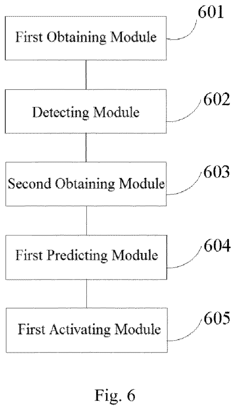

The embodiments of the invention further provides a device for obtaining a movement track which corresponds to the above method for obtaining a movement track provided according to the embodiments of the preset disclosure. As shown in Fig. 6, the device includes: a first obtaining module 601, a detecting module 602, a second obtaining module 603, a first predicting module 604, and a first activating module 605.

The first obtaining module 601 is configured to obtain target image information captured.

The detecting module 602 is configured to detect whether preset person information exists in the target image information.

It may be determined whether the preset person corresponding to preset person information exists in the target image information by detecting whether preset person information exists in the target image information, and if the preset person exists in the target image information, the preset person may be the specific person the user wants to track, or the escaped criminals or suspects and so forth, according to the specific definition to the preset person information.

The second obtaining module 603 is configured to obtain a current geographic location of a current camera device capturing the target image information if the preset person information exists in the target image information.

The first predicting module 604 is configured to predict the movement track of a preset person according to the current geographic location and a motion state of the preset person corresponding to the preset person information, the motion state may be directly obtained or speculated from the preset gait of the preset person information.

The current geographic location of the current camera device capturing the target image information can be automatically obtained if the above preset person information exists in the target image information, such that the movement track of the preset person can be automatically and accurately predicted according to the current geographic location and the motion state of the preset person corresponding to the preset person information.

The first activating module 605 is configured to activate the target camera device along the movement track.

The target camera device and the current camera device can be positioned in the same or different monitoring system(s), and the target camera device may be a camera or devices with shooting function (such as cellphone) and may be connected with the current camera device by wired or wireless way, such as by WiFi network, Bluetooth or Mobile data network.

After the movement track is predicted, since the actual movement track of the preset person may change, the target camera device along the movement track may be activated so as to factually captured the preset person in time to accurately determine a final actual movement track of the preset person, and record the actual movement track of the preset person so as to determine the trace of preset person according to the actual movement track, which avoids cases that an accurate trace on the preset person and thus an actual track of the preset person may not be achieved in the later stage due to absence of a record of a previous track of the preset person, and avoids potential security risks to an area where the preset person is captured and users in the area.

Furthermore, image data which shows the actual movement track of the preset person may be further obtained by activating the target camera device, such that the movement track of the preset person may be vividly watched in later stage through the image data.

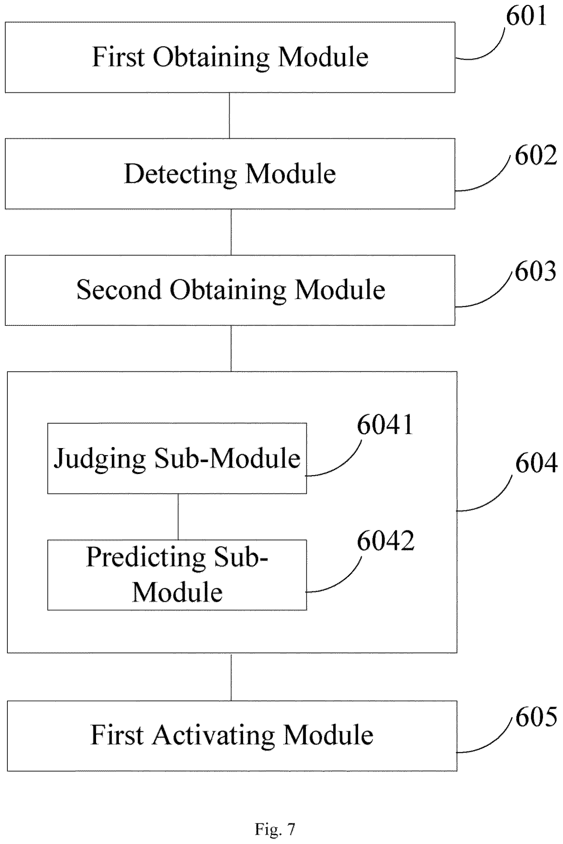

As shown in Fig. 7, in an embodiment, the first predicting module 604 may include: a judging sub-module 6041 and a predicting sub-module 6042.

The judging sub-module 6041 is configured to judge a current person location of the preset person according to the current geographic location and a location of the preset person information in the target image information.

After the current geographic location is obtained, since the current camera device corresponds to one shooting area, so the preset person may appear in any position of the shooting area. Therefore, when the preset person positions at different locations, locations of the preset person information in the target image information are different, and ratios in size of the location area the preset person information positioned to the target image information are different. Thus, the current person location of the preset person, i.e. an actual position coordinate of the preset person, may be accurately judged according to the current geographic location and the location of the preset person information in the target image information.

The predicting sub-module 6042 is configured to predict the movement track of the preset person depending on the current person location and the motion state of the preset person, in which the motion state includes at least one of the current motion mode and the historical motion parameter of the preset person.

The movement track of the preset person may be accurately predicted according to the actual current person location and the motion state of preset person.

Specifically, since different current motion states correspond to different motion parameters, therefore an approximate moving rate and moving direction may be obtained according to the current motion state, and thus the movement track of the preset person is accurately predicted; or the movement track of the preset person may be predicted by some algorithms used for movement track prediction, such as Kalman filter algorithm, after the historical motion parameter is obtained.

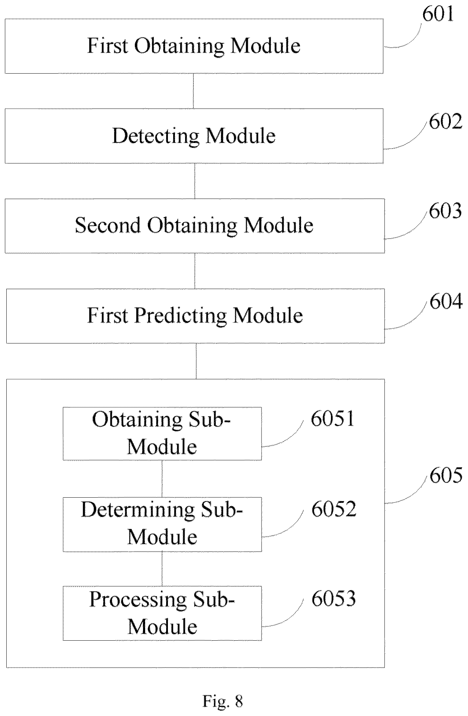

As shown in Fig. 8, in an embodiment, the first activating module 605 includes: an obtaining sub-module 6051, a determining sub-module 6052, and a processing sub-module 6053.

The obtaining sub-module 6051 is configured to obtain camera devices along the movement track.

The determining sub-module 6052 is configured to determine, from the camera devices, the target camera device from which the distance to the current geographic location is less than or equal to a preset distance.

The processing sub-module 6053 is configured to activate the target camera device to shoot the preset person and to update the movement track when the preset person is captured.

Since there may be multiple camera devices along the movement track and the camera devices located far away from the preset person cannot shoot the preset person in a short time, therefore, the nearer target camera device from which the distance to the current geographic location is less than or equal to the preset distance may be chosen, and to which an activation instruction may be transmitted, so that they are activated. Thus, the preset person is shot by the target camera device when the preset person moves into a shooting area of the target camera device. Besides, the current person location may be automatically determined again when the preset person is captured, so that the predicted movement track is in time updated, such as being corrected and modified and so on.

Additionally, the movement track of the preset person can be continually updated, corrected and modified by continually repeating the steps above. Thus the latest actual movement track may be obtained.

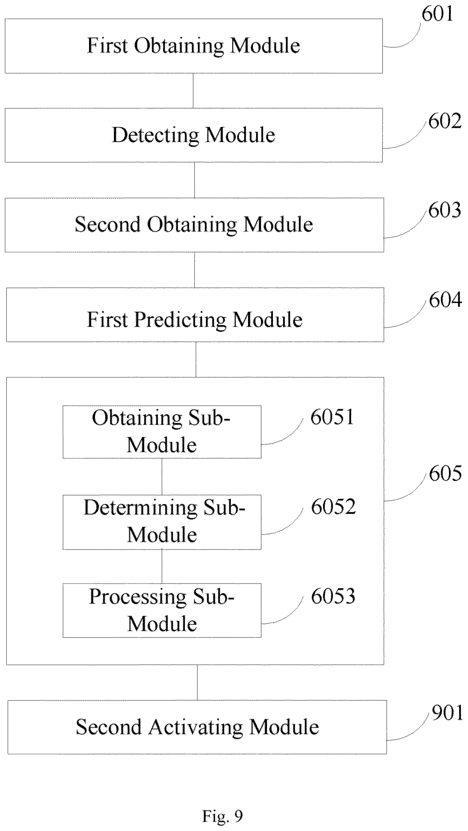

As shown in Fig. 9, in an embodiment, the device described above further includes:
a second activating module 901.

The second activating module 901 is configured to activate other camera devices along the movement track, from which the distance to the current geographic location is greater than the preset distance, if the preset person is not captured after the target camera device is activated.

If the preset person is not captured after the target camera device is activated, it indicates that the preset person is not tracked by the target camera device nearby. In order to track the movement track of the preset person, other camera devices along the movement track, from which the distance to the current geographic location is greater than the preset distance, may be activated for further tracking the movement track of the preset person, such that the actual movement track of preset person is obtained, which is convenient for invocation and tracking in later stage.

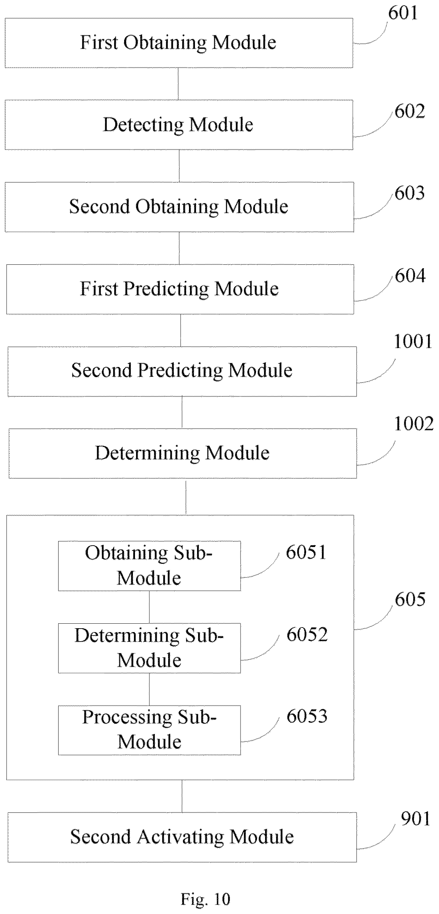

As shown in Fig. 10, in an embodiment, the device described above further includes: a second predicting module 1001 and a determining module 1002.

The second predicting module 1001 is configured to predict a current motion parameter of the preset person according to the motion state before the target camera device from which the distance to the current geographic location is less than or equal to a preset distance is determined from the camera devices, in which the current motion parameter includes one or more of a current moving rate and a current moving direction.

The determining module 1002 is configured to determine the preset distance according to the current motion parameter and the current geographic location.

Since different motion states correspond to different motion parameters, the numbers of camera devices in different preset distances are always different, and different numbers of camera devices are required due to different current motion parameters of the preset person (e.g. when the moving rate of the preset person is fast, the number of camera device required is large in case the preset person is missed by the camera devices), therefore, the preset distance which is suitable to the current motion parameter and the current geographic location may be determined according to the current motion parameter and the current geographic location after the current motion parameter is predicted depending on the motion state, so as to adopt suitable number of camera devices to shoot the preset person and obtain the latest movement track of the preset person in time.

Furthermore, as the numbers of the camera devices in the same distance are different depending on different geographic locations, e.g. in the same distance, the number of the camera devices in a mountainous area is much less than that in an urban area, thus, the current geographic location may be also considered when determining the preset distance.

The determining sub-module 6052 described above includes: a determining unit.

The determining unit is configured to determine, from the camera devices, the target camera device from which the distance to the current geographic location is less than or equal to the preset distance and whose direction corresponds to the current moving direction.

The target camera device, from which the distance to the current geographic location is less than or equal to the preset distance and whose direction corresponds to (i.e. be consistent with) the current moving direction, is determined from the camera devices when determining the target camera device, such that the preset person may be effectively shot so as to track and confirm the actual movement track of the preset person with not only the smallest number of the target camera devices, but with a decreased power consumption.

In an embodiment, the preset person information includes at least one of the preset image information, the preset action, the preset gait and the preset expression.

According to the third aspect useful to understand the invention, there is provided a device for obtaining a movement track, the device includes: a processor and a memory configured to store an instruction executable by the processor.

The processor is configured to:
obtain target image information captured;
detect whether preset person information exists in the target image information;
obtain a current geographic location of a current camera device capturing the target image information if the preset person information exists in the target image information;
predict a movement track of a preset person according to the current geographic location and a motion state of the preset person corresponding to the preset person information; and
activate a target camera device along the movement track.

The processor described above predicts the movement track of the preset person according to the current geographic location and the motion state of the preset person corresponding to the preset person information by:
judging a current person location of the preset person according to the current geographic location and a location of the preset person information in the target image information; and
predicting the movement track of the preset person according to the current person location and the motion state, in which the motion state includes at least one of a current motion mode and a historical motion parameter of the preset person.

The processor described above activates the target camera device along the movement track by:
obtaining camera devices along the movement track;
determining, from the camera devices, the target camera device from which the distance to the current geographic location is less than or equal to a preset distance; and
activating the target camera device to shoot the preset person, and updating the movement track when the preset person is captured.

The processor described above may be further configured to:
activate other camera devices along the movement track, from which the distance to the current geographic location is greater than the preset distance, if the preset person is not captured after the target camera device is activated.

Before the target camera device from which the distance to the current geographic location is less than or equal to the preset distance is determined from the camera devices, the processor described above:
predicts a current motion parameter of the preset person according to the current motion state, in which the current motion parameter comprises a current moving rate and a current moving direction; and
determine the preset distance according to the current motion parameter and the current geographic location.

The processor described above determines, from the camera devices, the target camera device from which the distance to the current geographic location is less than or equal to a preset distance by:
determining, from the camera devices, the target camera device from which the distance to the current geographic location is less than or equal to the preset distance and whose direction corresponds to the current moving direction.

The preset person information includes at least one of the preset image information, the preset action, the preset gait and the preset expression.

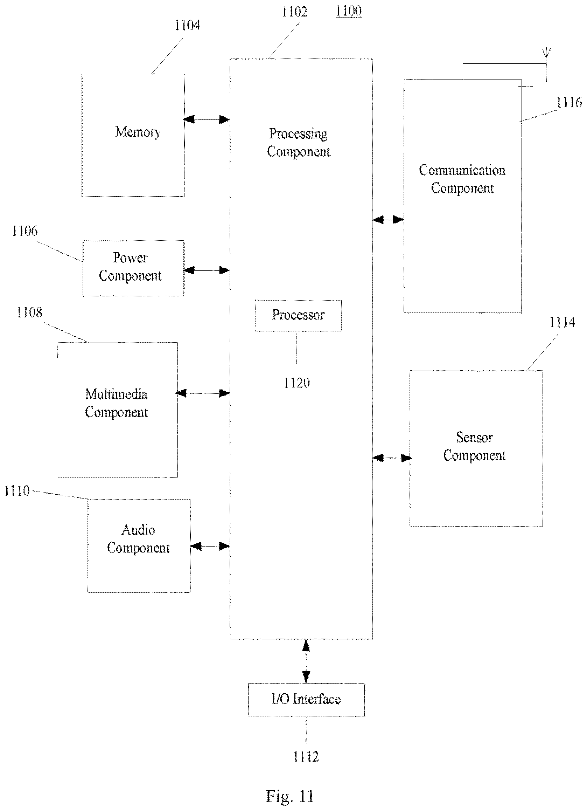

Fig. 11 is a block diagram showing a device 1100 for obtaining a movement track according to an example embodiment, the device applies to a terminal device. For example, the device 1100 may be a mobile phone, a computer, a digital broadcasting terminal, a messaging device, a game console, a tablet device, a medical equipment, a fitness equipment, a Personal Digital Assistant PDA, etc.

Referring to Fig. 11, the device 1100 may include the following one or at least two components: a processing component 1102, a memory 1104, a power component 1106, a multimedia component 1108, an audio component 1110, an Input/Output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or at least two processors 1120 to execute instructions to perform all or part of the steps in the above described methods. Moreover, the processing component 1102 may include one or at least two modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any storage objects or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or at least two power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or at least two touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1108 includes a front camera and/or a rear camera. The front camera and/or the rear camera may receive external multimedia data while the device 1100 is in an operation mode, such as a shooting mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface for the processing component 1102 and peripheral interface modules, such as a keyboard, a click wheel, buttons, and the like. The buttons may include, but are not limited to, a home button, a volume button, a starting button, and a locking button.

The sensor component 1114 includes one or at least two sensors to provide status assessments of various aspects of the device 1100. For instance, the sensor component 1114 may detect an open/closed status of the device 1100 and relative positioning of components (e.g. the display and the keypad of the device 1100). The sensor component 1114 may also detect a change in position of the device 1100 or of a component in the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate wired or wireless communication between the device 1100 and other devices. The device 1100 can access a wireless network based on a communication standard, such as WIFI, 2G, or 3G, or a combination thereof. In one example embodiment, the communication component 1116 receives a broadcast signal or broadcast associated information from an external broadcast management system via a broadcast channel. In one example embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1100 may be implemented with one or at least two application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as the memory 1104 including instructions. The above instructions are executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of the device 1100 described above, causes the device 1100 to perform a method for obtaining a movement track , the method includes:
obtaining target image information captured;
detecting whether preset person information exists in the target image information;
obtaining a current geographic location of a current camera device capturing the target image information, if the preset person information exists in the target image information;
predicting the movement track of a preset person according to the current geographic location and a motion state of the preset person corresponding to the preset person information; and
activating a target camera device along the movement track.

In an embodiment, predicting the movement track of the preset person according to the current geographic location and the motion state of the preset person corresponding to the preset person information includes:
judging a current person location of the preset person according to the current geographic location and a location of the preset person information in the target image information; and
predicting the movement track of the preset person according to the current person location and the motion state, in which the motion state comprises a current motion mode and a historical motion parameter of the preset person.

Activating the target camera device along the movement track includes:
obtaining camera devices along the movement track;
determining, from the camera devices, the target camera device from which the distance to the current geographic location is less than or equal to a preset distance; and
activating the target camera device to shoot the preset person, and updating the movement track when the preset person is captured.

In an embodiment, the method further includes:
activating other camera devices along the movement track, from which the distance to the current geographic location is greater than the preset distance, if the preset person is not captured after the target camera device is activated.

Before the target camera device from which the distance to the current geographic location is less than or equal to a preset distance is determined from the camera devices, the method further includes:
predicting a current motion parameter of the preset person according to the motion state, in which the current motion parameter comprises a current moving rate and a current moving direction; and
determining the preset distance according to the current motion parameter and the current geographic location.

Determining, from the camera devices, the target camera device from which the distance to the current geographic location is less than or equal to a preset distance includes:
determining, from the camera devices, the target camera device from which the distance to the current geographic location is less than or equal to the preset distance and whose direction corresponds to the current moving direction.

In an embodiment, the preset person information includes at least one of preset image information, a preset action, a preset gait and a preset expression.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for obtaining a movement track, comprising:
obtaining (S101) target image information captured by a current camera device;
detecting (S102) whether a preset person is comprised within the target image information according to information related to the preset person;
obtaining (S103) a current geographic location of the current camera device, and if the preset person is comprised within the target image information:
predicting (S104) the movement track of the preset person according to the current geographic location of the current camera device and a motion state, the motion state comprising at least one of a current motion mode and a historical motion parameter of the preset person;
predicting (S501) a current motion parameter of the preset person according to the motion state, wherein the current motion parameter comprises a current moving rate and a current moving direction, wherein different motion states correspond to different motion parameters;
determining (S502) a distance according to the current motion parameter and the current geographic location, such that there are a suitable number of camera devices within the determined distance of the current camera device according to the current motion parameter and the current geographic location to capture the preset person and obtain the latest movement track of the preset person in time; wherein the numbers of the camera devices in the same distance are different depending on different geographic locations;
obtaining (B 1) camera devices along the movement track;
determining (B2), from the camera devices obtained, a target camera device along the movement track so as to capture the preset person with the smallest number of camera devices, wherein the distance of the target camera device to the current geographic location is less than or equal to the determined distance, and whose direction corresponds to the current moving direction; and
activating (B3) the target camera device to capture the preset person, and updating the movement track when the preset person is captured.

2. The method of claim 1, wherein predicting the movement track of the preset person according to the current geographic location and the at least one of the current motion mode and the historical motion parameter of the preset person comprises:
determining a current person location of the preset person according to the current geographic location of the current camera device and a location of the preset person in the target image information; and
predicting the movement track of the preset person according to the current person location and the at least one of the current motion mode and the historical motion parameter.

3. The method of claim 2, further comprising:
activating other camera devices along the movement track, from which the distance to the current geographic location is greater than the preset distance, if the preset person is not captured by the target camera device activated.

4. The method of any one of claims 1-3, wherein the information related to the preset person comprises at least one of preset image information, a preset action, a preset gait and a preset expression.

5. A device for obtaining a movement track, comprising:
a first obtaining module (601) configured to obtain target image information captured by a camera device;
a detecting module (602) configured to detect whether a preset person is comprised within the target image information according to information related to the preset person;
a second obtaining module (603) configured to obtain a current geographic location of the current camera device if the preset person is comprised within the target image information;
a first predicting module (604) configured to predict the movement track of the preset person according to the current geographic location of the current camera device and a motion state, the motion state comprising at least one of a current motion mode and a historical motion parameter of the preset person;
a second predicting module (1001) configured to predict a current motion parameter of the preset person according to the motion state, wherein the current motion parameter comprises a current moving rate and a current moving direction, wherein different motion states correspond to different motion parameters;
a determining module (1002) configured to determine a distance according to the current motion parameter and the current geographic location, such that there are a suitable number of camera devices within the determined distance of the current camera device according to the current motion parameter and the current geographic location to capture the preset person and obtain the latest movement track of the preset person in time; wherein the numbers of the camera devices in the same distance are different depending on different geographic locations; and
a first activating module (605) configured to activate a target camera device, wherein the first activating module comprises:
an obtaining sub-module (6051) configured to obtain camera devices along the movement track;
a determining sub-module (6052) configured to determine, from the camera devices obtained, the target camera device along the movement track so as to capture the preset person with the smallest number of camera devices, wherein the distance of the target camera device to the current geographic location is less than or equal to the determined distance, and whose direction corresponds to the current moving direction; and
a processing sub-module (6053) configured to activate the target camera device to capture the preset person and update the movement when the preset person is captured.

6. The device of claim 5, wherein the first predicting module comprises:
a determining sub-module configured to determine a current person location of the preset person according to the current geographic location of the current camera device and a location of the preset person in the target image information; and
a predicting sub-module configured to predict the movement track of the preset person according to the current person location and the at least one of the current motion mode and the historical motion parameter.

7. The device of claim 6, further comprising:
a second activating module configured to activate other camera devices along the movement track, from which the distance to the current geographic location of the current camera device is greater than the preset distance, if the preset person is not captured by the target camera device activated.

8. The device of any one of claims 5-7, wherein the information related to the preset person comprises at least one of preset image information, a preset action, a preset gait and a preset expression.

9. A non-transitory computer readable storage medium having stored thereon instructions that, when executed cause a processor of a device to perform the method of any of claims 1 to 4.

## Patentansprüche

1. Verfahren für den Erhalt einer Bewegungsbahn, das aufweist:
Erhalten (S101) von durch eine aktuelle Kameravorrichtung erfassten Zielbildinformationen;
Erkennen (S102), ob die Zielbildinformationen eine voreingestellte Person aufweisen, gemäß Informationen bezüglich der voreingestellten Person;
Erhalten (S103) eines aktuellen geographischen Standorts der aktuellen Kameravorrichtung und, falls die Zielbildinformationen die voreingestellte Person aufweisen:
Vorhersagen (S104) der Bewegungsbahn der voreingestellten Person gemäß dem aktuellen geographischen Standort der aktuellen Kameravorrichtung und einem Bewegungszustand, wobei der Bewegungszustand wenigstens einen von einem aktuellen Bewegungsmodus und einem historischen Bewegungsparameter der voreingestellten Person aufweist;
Vorhersagen (S501) eines aktuellen Bewegungsparameters der voreingestellten Person gemäß dem Bewegungszustand, wobei der aktuelle Bewegungsparameter eine aktuelle Bewegungsgeschwindigkeit und eine aktuelle Bewegungsrichtung aufweist, wobei verschiedene Bewegungszustände verschiedenen Bewegungsparametern entsprechen;
Bestimmen (S502) einer Entfernung gemäß dem aktuellen Bewegungsparameter und dem aktuellen geographischen Standort, so dass sich innerhalb der bestimmten Entfernung der aktuellen Kameravorrichtung gemäß dem aktuellen Bewegungsparameter und dem aktuellen geographischen Standort eine geeignete Anzahl von Kameravorrichtungen zum rechtzeitigen Erfassen der voreingestellten Person und Erhalten der jüngsten Bewegungsbahn der voreingestellten Person befinden; wobei die Anzahlen der Kameravorrichtungen in der gleichen Entfernung in Abhängigkeit von verschiedenen geographischen Standorten verschieden sind;
Erhalten (B1) von Kameravorrichtungen entlang der Bestimmen (B2), anhand der erhaltenen Kameravorrichtungen, einer Zielkameravorrichtung entlang der Bewegungsbahn, um die voreingestellte Person mit der kleinsten Anzahl von Kameravorrichtungen zu erfassen, wobei die Entfernung der Zielkameravorrichtung zum aktuellen geographischen Standort so groß wie die bestimmte Entfernung oder kleiner ist und deren Richtung der aktuellen Bewegungsrichtung entspricht; und
Aktivieren (B3) der Zielkameravorrichtung zum Erfassen der voreingestellten Person und Aktualisieren der Bewegungsbahn, wenn die voreingestellte Person erfasst wird.

2. Verfahren nach Anspruch 1, wobei das Vorhersagen der Bewegungsbahn der voreingestellten Person gemäß dem aktuellen geographischen Standort und dem wenigstens einen von dem aktuellen Bewegungsmodus und dem historischen Bewegungsparameter der voreingestellten Person aufweist:
Bestimmen eines aktuellen Personenstandorts der voreingestellten Person gemäß dem aktuellen geographischen Standort der aktuellen Kameravorrichtung und einem Standort der voreingestellten Person in den Zielbildinformationen.

3. Verfahren nach Anspruch 2, das ferner aufweist:
Aktivieren anderer Kameravorrichtungen entlang der Bewegungsbahn, deren Entfernung zum aktuellen geographischen Standort größer als die voreingestellte Entfernung ist, falls die voreingestellte Person nicht von der aktivierten Zielkameravorrichtung erfasst wird.

4. Verfahren nach einem der Ansprüche 1 bis 3, wobei die Informationen bezüglich der voreingestellten Person wenigstens eines von voreingestellten Bildinformationen, einer voreingestellten Handlung, einer voreingestellten Gangart und einem voreingestellten Ausdruck aufweisen.

5. Vorrichtung für den Erhalt einer Bewegungsbahn, die aufweist:
ein erstes Erhaltungsmodul (601), das zum Erhalten von durch eine Kameravorrichtung erfassten Zielbildinformationen konfiguriert ist;
ein Erkennungsmodul (602), das zum Erkennen, ob die Zielbildinformationen eine voreingestellte Person aufweisen, gemäß Informationen bezüglich der voreingestellten Person konfiguriert ist;
ein zweites Erhaltungsmodul (603), das zum Erhalten eines aktuellen geographischen Standorts der aktuellen Kameravorrichtung, falls die Zielbildinformationen die voreingestellte Person aufweisen, konfiguriert ist;
ein erstes Vorhersagemodul (604), das zum Vorhersagen der Bewegungsbahn der voreingestellten Person gemäß dem aktuellen geographischen Standort der aktuellen Kameravorrichtung und einem Bewegungszustand konfiguriert ist, wobei der Bewegungszustand wenigstens einen von einem aktuellen Bewegungsmodus und einem historischen Bewegungsparameter der voreingestellten Person aufweist;
ein zweites Vorhersagemodul (1001), das zum Vorhersagen eines aktuellen Bewegungsparameters der voreingestellten Person gemäß dem Bewegungszustand konfiguriert ist, wobei der aktuelle Bewegungsparameter eine aktuelle Bewegungsgeschwindigkeit und eine aktuelle Bewegungsrichtung aufweist, wobei verschiedene Bewegungszustände verschiedenen Bewegungsparametern entsprechen;
ein Bestimmungsmodul (1002), das zum Bestimmen einer Entfernung gemäß dem aktuellen Bewegungsparameter und dem aktuellen geographischen Standort konfiguriert ist, so dass sich innerhalb der bestimmten Entfernung der aktuellen Kameravorrichtung gemäß dem aktuellen Bewegungsparameter und dem aktuellen geographischen Standort eine geeignete Anzahl von Kameravorrichtungen zum rechtzeitigen Erfassen der voreingestellten Person und Erhalten der jüngsten Bewegungsbahn der voreingestellten Person befinden; wobei die Anzahlen der von verschiedenen geographischen Standorten verschieden sind;
ein erstes Aktivierungsmodul (605), das zum Aktivieren einer Zielkameravorrichtung konfiguriert ist, wobei das Aktivierungsmodul aufweist:
ein Erhaltungsuntermodul (6051), das zum Erhalten von Kameravorrichtungen entlang der Bewegungsbahn konfiguriert ist;
ein Bestimmungsuntermodul (6052), das zum Bestimmen, anhand der erhaltenen Kameravorrichtungen, einer Zielkameravorrichtung entlang der Bewegungsbahn, um die voreingestellte Person mit der kleinsten Anzahl von Kameravorrichtungen zu erfassen, konfiguriert ist, wobei die Entfernung der Zielkameravorrichtung zum aktuellen geographischen Standort so groß wie die bestimmte Entfernung oder kleiner ist und deren Richtung der aktuellen Bewegungsrichtung entspricht; und
ein Verarbeitungsuntermodul (6053), das zum Aktivieren der Zielkameravorrichtung zum Erfassen der voreingestellten Person und zum Aktualisieren der Bewegung, wenn die voreingestellte Person erfasst wird, konfiguriert ist.

6. Vorrichtung nach Anspruch 5, wobei das erste Vorhersagemodul aufweist:
ein Bestimmungsuntermodul, das zum Bestimmen eines aktuellen Personenstandorts der voreingestellten Person gemäß dem aktuellen geographischen Standort der aktuellen Kameravorrichtung und einem Standort der voreingestellten Person in den Zielbildinformationen konfiguriert ist.

7. Vorrichtung nach Anspruch 6, die ferner aufweist:
ein zweites Aktivierungsmodul, das zum Aktivieren anderer Kameravorrichtungen entlang der Bewegungsbahn, deren Entfernung zum aktuellen geographischen Standort größer als die voreingestellte Entfernung ist, falls die voreingestellte Person nicht von der aktivierten Zielkameravorrichtung erfasst wird, konfiguriert ist.

8. Vorrichtung nach einem der Ansprüche 5 bis 7, wobei die Informationen bezüglich der voreingestellten Person wenigstens eines von voreingestellten Bildinformationen, einer voreingestellten Handlung, einer voreingestellten Gangart und einem voreingestellten Ausdruck aufweisen.

9. Nichtflüchtiges computerlesbares Speichermedium mit darauf gespeicherten Anweisungen, die bei Ausführung einen Prozessor einer Vorrichtung zum Durchführen des Verfahrens nach einem der Ansprüche 1 bis 4 veranlassen.

## Revendications

1. Procédé d'obtention d'un suivi de mouvement, comprenant :
obtenir (S 101) des informations d'image cible saisie par un dispositif de caméra courant ;
détecter (S 102) si une personne présélectionnée est comprise dans les informations d'image cible conformément à des informations associées à la personne présélectionnée ;
obtenir (S103) un emplacement géographique courant du dispositif de caméra courant, et si la personne présélectionnée est comprise dans les informations d'image courante :
prédire (S104) le suivi de mouvement de la personne présélectionnée conformément à l'emplacement géographique courant du dispositif de caméra courant et à un état de mouvement, l'état de mouvement comprenant au moins l'un d'entre un mode de mouvement courant et un paramètre de mouvement historique de la personne présélectionnée ;
prédire (S501) un paramètre de mouvement courant de la personne présélectionnée conformément à l'état de mouvement, dans lequel le paramètre de mouvement courant comprend une vitesse courante de déplacement et une direction courante de déplacement, dans lequel différents états de mouvement correspondent à différents paramètres de mouvement ;
déterminer (S502) une distance conformément au paramètre de mouvement courant et à l'emplacement géographique courant, de sorte qu'il y a un nombre approprié de dispositifs de caméra dans la distance déterminée du dispositif de caméra courant conformément au paramètre de mouvement courant et à l'emplacement géographique courant pour saisir la personne présélectionnée et obtenir le tout dernier suivi de mouvement de la personne présélectionnée dans le temps, dans lequel les nombres de dispositifs de caméra dans la même distance sont différents en fonction de différents emplacements géographiques ;
obtenir (B1) des dispositifs de caméra le long du suivi de mouvement ;
déterminer (B2), des dispositifs de caméra obtenus, un dispositif de caméra cible le long du suivi de mouvement de manière à saisir la personne présélectionnée avec le plus petit nombre de dispositifs de caméra, dans lequel la distance du dispositif de caméra cible à l'emplacement géographique courant est moindre que ou égale à la distance déterminée et dont la direction correspond à la direction courante de déplacement, et
activer (B3) le dispositif de caméra cible pour saisir la personne présélectionnée et actualiser le suivi de mouvement lorsque la personne présélectionnée est saisie.

2. Procédé selon la revendication 1, dans lequel prédire le suivi de mouvement de la personne présélectionnée conformément à l'emplacement géographique courant et au au moins un mode de mouvement courant et au paramètre de mouvement historique de la personne présélectionnée comprend :
déterminer un emplacement courant de personne de la personne présélectionnée conformément à l'emplacement géographique courant du dispositif de caméra courant et à un emplacement de la personne présélectionnée dans les informations d'image cible.

3. Procédé selon la revendication 2, comprenant en outre :
activer d'autres dispositifs de caméra le long du suivi de mouvement, desquels la distance jusqu'à l'emplacement géographique courant est plus grande que la distance préréglée, si la personne présélectionnée n'est pas saisie par le dispositif de caméra cible activé.

4. Procédé selon l'une quelconque des revendications 1-3, dans lequel les informations associées à la personne présélectionnée comprennent au moins l'une d'entre des informations d'image présélectionnée, une action présélectionnée, une démarche présélectionnée et une expression présélectionnée.

5. Dispositif pour obtenir un suivi de mouvement, comprenant :
un premier module d'obtention (601) configuré pour obtenir des informations d'image cible saisie par un dispositif de caméra ;
un module de détection (602) configuré pour détecter si une personne présélectionnée est comprise dans les informations d'image cible conformément aux informations associées à la personne présélectionnée ;
un deuxième module d'obtention (603) configuré pour obtenir un emplacement géographique courant du dispositif de caméra courant si la personne présélectionnée est comprise dans les informations d'image courante :
un premier module de prédiction (604) configuré pour prédire le suivi de mouvement de la personne présélectionnée conformément à l'emplacement géographique courant du dispositif de caméra courant et à un état de mouvement, l'état de mouvement comprenant au moins l'un d'entre un mode de mouvement courant et un paramètre de mouvement historique de la personne présélectionnée ;
un deuxième module de prédiction (1001) configuré pour prédire un paramètre de mouvement courant de la personne présélectionnée conformément à l'état de mouvement, dans lequel le paramètre de mouvement courant comprend une vitesse courante de déplacement et une direction courante de déplacement, dans lequel différents états de mouvement correspondent à différents paramètres de mouvement ;
un module de détermination (1002) configuré pour déterminer une distance conformément au paramètre de mouvement courant et à l'emplacement géographique courant, de sorte qu'il y a un nombre approprié de dispositifs de caméra dans la distance déterminée du dispositif de caméra courant conformément au paramètre de mouvement courant et à l'emplacement géographique courant pour saisir la personne présélectionnée et obtenir le tout dernier suivi de mouvement de la personne présélectionnée dans le temps, dans lequel les nombres de dispositifs de caméra dans la même distance sont différents en fonction de différents emplacements géographiques ; et
un premier module d'activation (605) configuré pour activer un dispositif de caméra cible, dans lequel le premier module d'activation comprend :
un sous-module d'obtention (6051) configuré pour obtenir des dispositifs de caméra le long du suivi de mouvement ;
un sous-module de détermination (6052) configuré pour déterminer, des dispositifs de caméra obtenus, le dispositif de caméra cible le long du suivi de mouvement de manière à saisir la personne présélectionnée avec le plus petit nombre de dispositifs de caméra, dans lequel la distance du dispositif de caméra cible à l'emplacement géographique courant est moindre que ou égale à la distance déterminée, et dont la direction correspond à la direction de déplacement courante ; et
un sous-module de traitement (6053) configuré pour activer le dispositif de caméra cible afin de saisir la personne présélectionnée et actualiser le mouvement lorsque la personne présélectionnée est saisie.

6. Dispositif selon la revendication 5, dans lequel le premier module de prédiction comprend :
un sous-module de détermination configuré pour déterminer un emplacement courant de personne de la personne présélectionnée conformément à l'emplacement géographique courant du dispositif de caméra courant et à un emplacement de la personne présélectionnée dans les informations d'image cible.

7. Dispositif selon la revendication 6, comprenant en outre :
un deuxième module d'activation configuré pour activer d'autres dispositifs de caméra le long du suivi de mouvement, desquels la distance jusqu'à l'emplacement géographique courant du dispositif de caméra courant est plus grande que la distance préréglée, si la personne présélectionnée n'est pas saisie par le dispositif de caméra cible activé.

8. Dispositif selon l'une quelconque des revendications 5-7, dans lequel les informations associées à la personne présélectionnée comprennent au moins l'une d'entre des informations d'image présélectionnée, une action présélectionnée, une démarche présélectionnée et une expression présélectionnée.

9. Support de stockage non transitoire lisible par ordinateur ayant des instructions stockées dessus qui, lorsque exécutées font qu'un processeur d'un dispositif met en oeuvre le procédé selon l'une quelconque des revendication 1 à 4.
